Europäisches Patentamt

European Patent Office

Office européen des brevets

(19)

(11) Publication number: **0 036 757**
A1

(12) **EUROPEAN PATENT APPLICATION**

(21) Application number: 81301166.5

(22) Date of filing: 18.03.81

(51) Int. Cl.³: **B 29 D 7/02, B 29 D 7/24**

(30) Priority: 21.03.80 US 132793

(43) Date of publication of application: 30.09.81
Bulletin 81/39

(84) Designated Contracting States: **AT BE CH DE FR GB IT LI LU NL SE**

(71) Applicant: Keuchel, Herbert W., 765 Forestview Drive, Tallmadge Ohio (US)
Applicant: Setterstrom, Carl A., 11, Timberline Road, Hohokus New Jersey (US)
Applicant: Farris, George A., 611 Linwood Avenue, North Canton Ohio (US)

(72) Inventor: Keuchel, Herbert W., 765 Forestview Drive, Tallmadge Ohio (US)
Inventor: Setterstrom, Carl A., 11, Timberline Road, Hohokus New Jersey (US)
Inventor: Farris, George A., 611 Linwood Avenue, North Canton Ohio (US)

(74) Representative: Hale, Stephen Geoffrey et al, J.Y. & G.W. Johnson Furnival House 14/18 High Holborn, London WC1V 6DE (GB)

(54) Process and apparatus for producing biaxially attenuated thermoplastic film.

(57) A process for producing a biaxially attenuated thermoplastic film comprises extruding a substantially planar circular film membrane from a die (14), quenching said film membrane after it is extruded from said die, for example by air jets (19), transmitting peripheral stress to said film membrane as it leaves said die and while it is being quenched, for example by passage around a torus (15), and maintaining said peripheral stress throughout said film membrane during transition from a molten to solid state. Liquid may alternatively be employed as a quenching medium and the solidified membrane may be reheated and then radially stretched.

- 1 -

## Process and apparatus for producing biaxially attenuated thermoplastic film

This invention relates to a method and apparatus for the production of biaxially attenuated thermoplastic film.

Tubular films are well known products which are normally produced by the well known bubble inflation processs. This process is well suited for producing films of relatively low levels of orientation from polymers with good rheological properties. However, the degree of orientation that is obtainable by this process is limited by the bubble inflation pressure which may be maintained, and which is controlled by the melt strength of the polymer and by the cooling rate applied during the initial state of extrusion.

This invention seeks to provide a process, and apparatus, for the production of biaxially oriented film of improved balance and higher orientation, preferably biaxially oriented film with specific engineered shrink properties, controlled optical properties, and/or controlled crystallinity.

According to a first aspect of the invention there is provided a process for producing a biaxially attenuated thermoplastic film, which comprises extruding a substantially planar circular film membrane from a die, quenching said film membrane after it is extruded from said die, transmitting peripheral stress to said film membrane as it leaves said die and while it is being quenched and maintaining said peripheral stress throughout said film membrane during transition through a molten to solid state.

According to a second aspect of the invention there is provided apparatus for producing biaxially attenuated and oriented film comprising means for extruding a substantially flat circular film membrane from a die; means for transmitting peripheral stress to said film membrane as it leaves said die while it is being quenched; said peripheral stress being maintained throughout said membrane between said stress transmitting means and said die.

According to a third aspect of the invention there is provided a process for producing a biaxially oriented film which comprises extruding a substantially planar circular film membrane under compression through a circular die; quenching said molten film; applying peripheral stress to said molten film as it is being quenched and maintaining said peripheral stress until said film solidifies.

According to a fourth aspect of the invention there is provided apparatus for producing a biaxially oriented film comprising means for extruding a substantially planar circular film membrane under compression through a circular die; means for quenching said molten film; means for radially stressing said film as it is being quenched and maintaining said stress until said film solidifies.

By the use of the present invention, at least in a preferred embodiment, it is possible to convert into films polymers and polymer systems which heretofore were difficult, if not impossible, to be processed by the bubble inflation method, including polymer blends and polymer composites containing filler, as well as to convert into cellular structures or foams polymer compositions which contain blowing agents and optionally also mineral fillers and which are difficult, if not impossible, to be processed by the bubble inflation method.

In the process of the invention a molten thermoplastic is extruded from a circular die so as to create a continuous circular film membrane. In one embodiment, toroidal nip rolls are secured coaxially relative to the axis of the circular die, the nip provided by these rolls having a circumference substantially greater than the circumference of the die slot. Upon emerging from the circular die, the extrudate is cooled. The film membrane is passed through the toroidal nip rolls, with at least one of the rolls being mechanically driven. The nip rolls exert a peripheral stress about the entire film membrane. Accordingly, the membrane is molten as it exits from the die slot and undergoes a transition from a molten to a solid state, and is in such a solid state when it passes through the toroidal nip rolls. Because of the peripheral stress exerted on the film about an entire 360° angle, the thickness of the membrane from the time it exits from the die slot necessarily reduces as it approaches the toroidal nip rolls. Due to the fact that the membrane is of a thermoplastic extrudate which is cohesive and resists rupture, the extrudate must spread during drawdown so as to fill the increasing area between the die slot and the nip rolls. This results in a stress being placed on the film in a radial direction and a stress being placed on the film in a transverse direction with the resultant stress being determined by the combination of the two vector forces which are substantially radial and substantially transverse. As a result of these two stresses, the product which leaves the nip rolls is substantially biaxially oriented. In the following discussion, the use of the term "planar circular film membrane" refers to that membrane between the die slot and the toroidal nip rolls which proceeds from a molten to a solid state and which is subjected to the forces described hereinabove. Since the nip provided by the toroidal rolls may be adjusted relative to the die slot to a position where it does not lie in a plane with the die slot, this planar circular film membrane may form part of a cone instead of a perfectly flat circular film membrane. As mentioned above, the process normally includes a means for cooling the extrudate as it emerges from the die slot so that its temperature is lowered substantially below the melting temperature of the polymer before it reaches the toroidal nip rolls.

In a further embodiment of the invention a liquid cooling bath is provided such that the planar circular membrane enters the bath between the die slot and the toroidal nip rolls.

It should be noted that when a subsequent take-up of the product is such that the film undergoes a substantial change in direction downstream of the die slot, a single torus may be used instead of a pair of toroidal nip rolls.

If desired, the quenched extrudate may be reheated, preferably to a temperature between the initial quenched temperature and the melting temperature of the polymer, by any convenient heating means. Optimization of temperatures during this stage facilitates stretching and/or induces crystalline orientation of the extrudate. The extrudate is then cooled, preferably via heat transfer to its surroundings, to a temperature substantially below the melting or flow temperature of the polymer, and is substantially uniformly stretched, preferably over the outside of a torus. The product may then be taken up or optionally split prior to take-up to provide a substantially flat sheet.

The basic polymer may also contain one or more additives such as fillers, flame retardants, coloring components, reinforcing agents or blowing agents for foam. Additionally, the extrudate may be pigmented or, if desired, printed as may be required.

The present invention may be used on any of the thermoplastic resins which can be formed into shaped articles by melt extrusion Among the polymers which are suitable are: polyolefins, thermoplastic polyesters, polyamides, polystyrenes and styrene copolymers (including ABS), polycarbonates, polyacrylates, polyvinyls (including polyvinylidenes), thermoplastic polyurethanes, polyacetals and ionomers, also copolymers of the respective monomers and polymer blends including elastomers.

The invention will now be described, by way of example, with reference to the accompanying drawings, wherein

Figure 1 is a schematic representation of a first embodiment of apparatus according to the present invention,

Figure 2 is a graphic representation of a typical process of the present invention,

Figure 3 is a schematic plan of a modified form of the apparatus of Figure 1,

Figure 4 is a sectional view taken on the line 4-4 of Figure 3, and

Figures 5 to 7 are schematic cross-sectional views of three further embodiments of apparatus according to the present invention.

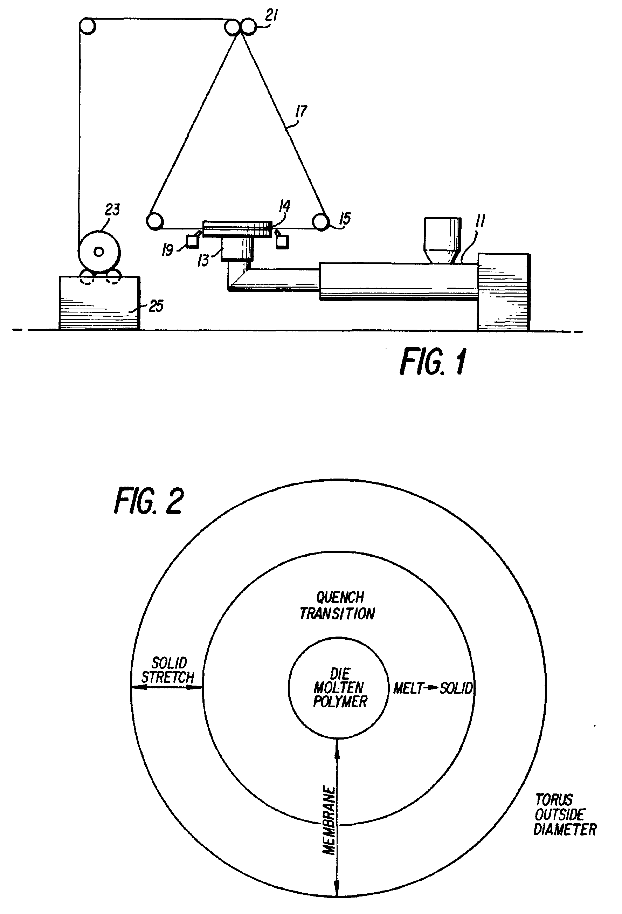

Figure 1 is a schematic representation of the basic components of apparatus according to the present invention. A molten polymer is extruded through an extruder 11 to a circular die 13 and exits from it through the radial gap of a die 14. The extrudate is quenched by air from jets 19 and then passes over a torus 15 so as to form a tubular film 17. This tubular film in the embodiment shown is folded together with nip rolls 21 and is taken up by a product roll 23 which is driven by a motor winder 25.

Figure 2 is a graphic representation of the transition of a molten polymer into a solid oriented film. As can be seen, the molten polymer exits from the radial die gap and goes through a quench transition from a melt to a solid as indicated and from that point it goes into a solid stretch to the outside diameter of the torus, thus constituting a membrane between the die and the outside of the torus undergoing a transition from a melt to a solid.

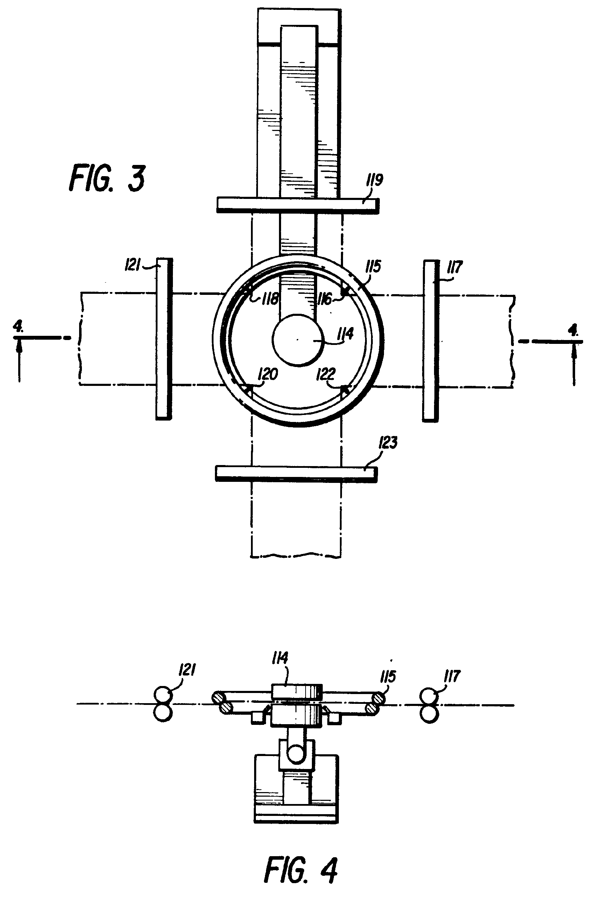

Turning now to Figures 3 and 4, there is illustrated a modification of the structure shown in Figure 1 whereby a circular film membrane may be produced which consists of a planar film as described hereinabove. A die 114 extrudes the desired polymer into a planar circular film membrane which is then divided into four segments by means of splitters 116, 118, 120 and 122. Each of the planar film segments passes through toroidal nip rolls 115 and is taken up by a respective one of nip roll pairs 117, 119, 121 and 123. Thus, four separate and independent film sheets are produced and taken up by rollers.

It should be understood that the nip provided by the rolls 115 does not necessarily need to be coplanar with the lip of the die 114, but may be displaced upwardly so that the membrane moves therebetween at an angle and still allow the various nip rolls to act in association with the die as shown. Preferably, the toroidal nip rolls are not of equal diameter, in order to cradle one torus inside of the other for better alignment and traction. Such relative size differential is indicated in Figure 4.

The present invention, through the application of radial stress, provides the ability to induce high transverse drawdown to a molten extrudate, which increases the propensity for further transverse stretching after the product is solidified. Thus, it is important to be able to provide a biaxial extrudate, early in the process, from the melt to the finished product. In general, biaxial melt drawdown sets up the product for further stretch. Continuing the process through the plastic state produces further orientationand in some polymers produces crystalline orientation.

It is important to note that the radial extrusion in accordance with the present invention, unlike normal tubular extrusion, is a planar process. The melt expands outwardly and is suspended between the slot and the stress perimeter as determined by the torus. Stresses may be induced by pulling the web radially around a torus, or through the nip between toroidal rolls, with no need for air support or the like.

In a coplanar, coaxial arrangement, mass drawdown of the extrudate occurs in a precise manner. For every centimeter of radial travel from the die slot to the torus, the attenuating membrane increases in width by $2\pi$, or about 6.28, cms. Transverse drawdown, therefore, takes place to accommodate this increase in width. Therefore, drawdown includes radial and transverse attenuation as defined above.

As a practical consideration, the use of a mechanical device such as a torus, located coaxially with a circular die slot, ensures concentricity and mechanical stability in extrusion regardless of air currents, draughts and misalignment of the quenching means, which are disastrous to blown film operation. At the same time, the torus provides positive radial stretching. The torus, in radial stretching and mechanical positioning of the extrudate, makes it possible to orient difficult to process thermoplastics, such as elastomers, and enables the production of wider films at a higher expansion ratio than is possible with blown film.

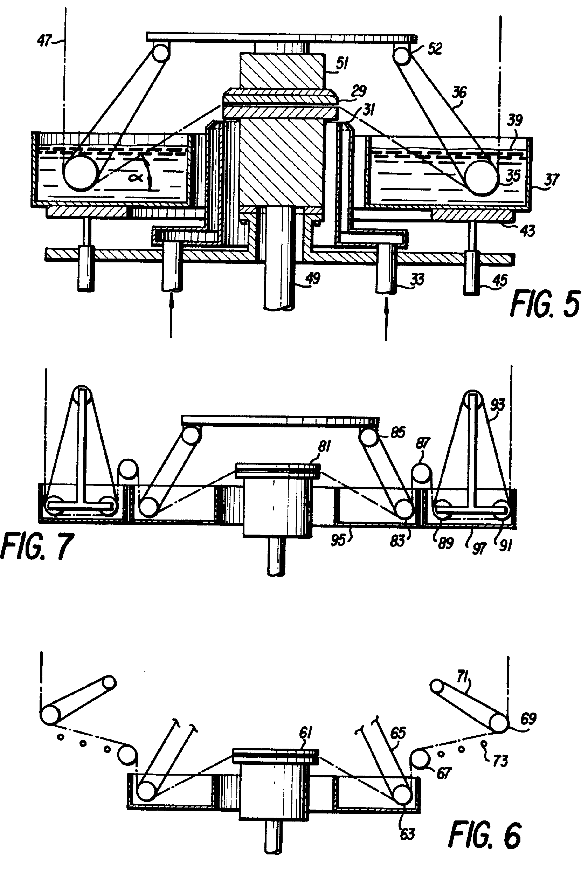

Figure 5 is a sectional view of an embodiment wherein the radial gap of a die 29 and an air jet 31, which is supplied by an air conduit 33, are mounted in a particular configuration. Polymer is supplied to the die gap through a conduit 49. This configuration discloses one system wherein the film is especially designed for liquid quenching. Thus, a torus 35 is submerged in a quench tank 37 having a liquid level 39. The tank 37 is supported by a lifting plate 43 which is controlled by a hydraulic lifting cylinder 45. The lifting plate 43 and the associated hydraulic cylinder 45 adjust the height of the quench tank 37, thus effectively changing the liquid level 39 relative to the film membrane 47 so as to determine the point of entry of the film into the liquid.

The water quench system also uses an adjustable spacer 51 which determines the position of a torus 52, connected by belts 36 to the torus 35, relative to the stationary die. This permits selection of the angle $\alpha$ at which the film enters the liquid.

It should be noted that, in the system of Figure 5, the air quench jet 31 is normally used for only start-up control at the start of the quenching, whereas the actual quenching and molecular orientation occur in the liquid tank.

The liquid level within the quench tank determines the diameter at which the quenching begins. The wetted area, therefore, describes the area of highest radial stretching. The combination of the hydraulic lifting cylinder and the platform lift mechanism controls the height of the liquid level and the angle∝ and, therefore, that diameter at which the highest rate of quenching occurs.

The process proceeds so that the polymer extrudes radially out of the gap of the die 29 and spans the area as provided by the die and the diameter of the torus 35. Obviously, the die and the torus are not coplanar. Based on the size of the spacer 51, the extrudate expanding radially from the die to the torus forms a section of a cone. The liquid holding tank is then lifted until a portion of this cone-shaped extrudate immerses, causing the film to cool and to stretch radially over the diameter of the torus 35.

Initially, the extrudate is molten or near molten when it leaves the die. Air quenching is provided to control the viscous state of the extrudate during the initial part of the extrusion and may be shut off after start-up. Radial stretch applied to the extrudate over this region does not contribute significantly to transverse orientation, but it prevents linear flow orientation.

Upon contacting the liquid quench medium, the extrudate is rapidly chilled and solidified and experiences radial stretch with relatively high molecular orientation. Accordingly, orientation is primarily promoted and controlled by the area of the film actually in the liquid. Since quenching in a cool liquid, such as water, is very rapid and very efficient, polymer crystallization, in most cases, does not proceed to an appreciable extent and a film is therefore produced with high shrinkage and after-stretch potential. The rapid chilling which retards crystallinity, in most films, produces an optically clear film which may also possess unusual cling properties. This would not be possible without the rapid chilling and, therefore, would not occur in the bubble inflation process during air quench.

In another embodiment of this invention, a fast solidifying brittle film, such as polystyrene, is quenched in a hot liquid to heat the membrane in order to warm stretch it, producing a biaxial film. Without warm stretching, this film membrane would split and would not radially stretch over the torus.

If desired, a second state of radial stretching can be added to the initially radially stretched film. In such a multi-stage system, the film membrane coming from the first stage is fed into an area of further radial stretch or stretching. This area is formed by the first torus and a coaxially situated second torus.

If the diameter of the second torus is greater than the diameter of the first torus, positive radial stretching occurs as the film is further oriented. If the diameter of the second torus is equal to or smaller than the diameter of the first torus, the film will anneal and display greater dimensional stability (less thermal shrinkage). In the preferred system, the membrane is heated in the second stage generally to a higher temperature than in the first stage to facilitate stretching or relaxation.

In the embodiment shown in Figure 6, the extrudate is extruded from a die 61 and passes over a torus 63, driven by belts 65, and over an idler torus 67, and is further treated in a secondary operation as discussed above. The product coming out of the water quench tank passes over the idler torus 67 without changing diameter. It is then further radially stretched over a torus 69 (driven by belts 71) while passing through a region of elevated temperature such as steam from jets 73. Post-stretching of this type induces further crystalline orientation during radial stretching.

Figure 7 illustrates another embodiment wherein the extrudate from a die 81 passes over a torus 83 through a cooling bath 95, the torus 83 being driven by belts 85. The film emerges from the bath and passes over an idler roll 87 without being stretched, and passes into a heated bath 97 having two tori 89 and 91 driven by belts 93. In this embodiment, the secondary stretching occurs within the heated bath.

The process and apparatus described herein facilitate the achievement of balance and orientation resulting in biaxially oriented films.

Liquid quenching, replacing air quenching in several embodiments, produces, in most cases, an optically clear film. The angle $\alpha$, at which the cylindrical film passes over the expansion roll ranges from $75^\circ$ to $125^\circ$ and is preferably about $85^\circ$ to $90^\circ$. The total draw ratio or expansion ratio of the film generally ranges from about 1.5:1 to 20:1. The draw ratio may be calculated from the ratio of the initial diameter formed by the tubular extrudate and the final diameter of the torus. This ratio could be increased by additional second stage stretching if desired.

The above description and drawings are illustrative only since various equivalent components could be substituted within the systems described without departing from the invention.

Claims

1. A process for producing a biaxially attenuated thermoplastic film, characterised by the steps of extruding a substantially planar circular thermoplastic film membrane from a die, quenching the extruded film membrane, transmitting peripheral stress to the film membrane as it leaves the die and while it is being quenched, and maintaining the peripheral stress throughout the film membrane during the transition through a molten state to a solid state.

2. A process according to Claim 1, characterised in that the film membrane is extruded through a die gap substantially transverse to the axis of the die.

3. A process according to Claim 1 or 2, characterised by the further steps of reheating the solidified film membrane and radially stretching the reheated film membrane.

4. A process according to Claim 3, characterised in that the film membrane is reheated with steam or in a liquid bath.

5. Apparatus for producing biaxially attenuated and oriented film, characterised in that it comprises means (11) for extruding a substantially flat circular thermoplastic film membrane from a die (14; 114; 29; 61; 81), means for quenching the extruded film membrane; and means for transmitting peripheral stress to the film membrane as it leaves the die (14; 114; 29; 61; 81) while it is being quenched; the peripheral stress being maintained throughout the film membrane between the stress transmitting means and the die (14; 114; 29; 61; 81).

6. Apparatus according to Claim 5, characterised in that the means for transmitting peripheral stress comprises toroidal nip rolls (115) having at least one driven roll.

7. Apparatus according to Claim 5 or 6, characterised in that the extruding means comprises a radial die.

8. Apparatus according to Claims 6 and 7, characterised in that either the die (114) is substantially coplanar with the nip of the toroidal nip rolls (115) or the nip of the toroidal nip rolls (115) lies in a plane parallel to the plane of the die (114).

9. Apparatus according to any of Claims 5 to 8, characterised in that the means for quenching the film membrane comprises either a fluid jet (19; 31) adjacent the die (14, 114, 29) or a liquid bath (37; 95).

10. Apparatus according to Claim 9, characterised in that either the film enters the bath (37) at a predetermined angle ($\alpha$) relative to the surface (39) of the liquid and means (51) are provided for selectively varying said predetermined angle ($\alpha$), or means (43, 45) are provided for selectively varying the distance between the die (29) and the surface (39) of the liquid bath (37).

**FIG. 1**

**FIG. 2**

*FIG. 3*

*FIG. 4*

3 / 3          0036757

FIG. 5

FIG. 7

FIG. 6

| Category | Citation of document with indication, where appropriate, of relevant passages | Relevant to claim |
|---|---|---|
| | US - A - 3 583 034 (R. COLOMBO) <br> * column 3, lines 1 to 31 * <br> -- | 1,5 |
| | GB - A - 798 194 (DOW CHEMICAL CO.) <br> * claims 1, 2 * <br> -- | 1,2, 5,7 |
| | DE - A - 1 704 692 (GRÜNZWEIG & HARTMANN AG) <br> * claim 1 * <br> -- | 1,5 |
| | GB - A - 1 161 862 (DYNAMIT NOBEL AG) <br> * page 3, example * <br> -- | 3 |
| A | GB - A - 431 619 (NORDDEUTSCHE SEE-KABELWERKE AG) <br> * page 1, lines 62 to 65 * <br> -- | 1,5, 8 |
| A | DE - C - 655 014 (NORDDEUTSCHE SEE-KABELWERKE AG) <br> -- | 1,5,8 |
| A | DE - A1 - 2 647 555 (G. KRESS) <br> * fig. 1, 2 * <br> -- | 8 |
| A | DE - A - 1 928 883 (FARBWERKE HOECHST AG) <br> * claim 1 * <br> -- | |
| A | US - A - 3 714 309 (B.K. BIGLANO) <br> * column 4, lines 5 to 8 * | |

**DOCUMENTS CONSIDERED TO BE RELEVANT**

**CLASSIFICATION OF THE APPLICATION (Int. Cl.³)**

B 29 D    7/02
B 29 D    7/24

**TECHNICAL FIELDS SEARCHED (Int. Cl.³)**

B 29 D    7/00
B 29 D    27/00
B 29 F    3/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 15-06-1981 | BITTNER |

EPO Form 1503.1 06.78